# EUROPEAN PATENT SPECIFICATION

(11) **EP 2 395 592 B1**
(45) Date of publication and mention of the grant of the patent: **12.11.2014**
(21) Application number: 11169485.7
(22) Date of filing: 10.06.2011
(51) Int. Cl.: H01M 10/16, H01M 10/0587, H01M 10/12, H01M 2/02

(54) **Rechargeable battery**
Wiederaufladbare Batterie
Batterie rechargeable

(30) Priority: 14.06.2010 KR 20100055998
(43) Date of publication of application: 14.12.2011
(73) Proprietor: Samsung SDI Co., Ltd., Gyeonggi-do (KR); Robert Bosch GmbH, 70442 Stuttgart (DE)
(72) Inventor: Kwak, Yoontai, Yongin-si (KR); Kim, Yongsam, Yongin-si (KR); Yoo, Seokyoon, Yongin-si (KR); Lee, Chiyoung, Yongin-si (KR); Moon, Jongseok, Yongin-si (KR); Kim, Dongwook, Yongin-si (KR)
(74) Representative: Gulde & Partner

(56) References cited:
- WO-A2-03/094258
- GB-A- 2 068 633
- JP-A- 2005 203 192

## Description

### TECHNICAL FIELD

Embodiments relate to a rechargeable battery.

### BACKGROUND ART

Generally, lithium ion secondary batteries are widely used as a power source for small-sized electronic devices such as notebook computers and cellular phones. Furthermore, since the lithium ion secondary batteries have high power, high capacity, and light weight when compared to other secondary batteries, they are also being used in hybrid and electric automobiles.

Lithium ion secondary batteries used as a power source of automobiles should satisfy safety and reliability requirements under the severest conditions. There are a plurality of test categories for safety, among which the three most extreme test categories are for puncture, collapse, and overcharge.

The puncture and collapse tests are performed to estimate secondary battery-related damage in the event of a car accident, and are thus very important test categories for safety. Specifically, in tests performed under extreme conditions such as a nail penetration test and a collapse test, the battery should not excessively increase in temperature.

### SUMMARY

An aspect of the present invention provides a secondary battery in which a design of a support plate improves weld strengths between an electrode assembly and an electrode terminal and between the electrode assembly and the support plate.

Accordingly, it is provided a rechargeable battery comprising at least one electrode assembly having a first electrode, a second electrode and a separator interposed between the first and the second electrodes. This battery is defined in independent claim 1.

The at least one conductive plate may further comprises a third portion with a height, wherein each first portion has a first height, such that the sum of the first heights of the at least one first portion is smaller than the height of the third portion.

A flat portion of the one of the first or second uncoated region has preferably a fourth height being larger than the sum of the second heights of the at least one second portion.

In one embodiment, a plurality of second portions are provided spaced apart from each other and defining at least one cutout portion located between pairs of second portions.

In another embodiment, just a single second portion is provided spaced apart from the top and bottom of the electrode assembly.

The sum of the heights of the at least one cutout portion is preferably larger than the sum of the heights of the plurality of second portions.

The at least one second portion is preferably welded to the one of the first or second uncoated region, i.e. the at least one second portion is a welding portion.

In one embodiment, the support plate comprises a first conductive plate and a second conductive plate, wherein the first conductive plate is provided being electrically connected to the first uncoated region of the one of the at least one electrode assembly, and the second conductive plate is provided on the same side of the one of the at least one electrode assembly as the first conductive plate and being electrically connected to the second uncoated region of the electrode assembly.

Two sets of first and second conductive plates may be provided on opposing side surfaces of the one of the at least one electrode assembly.

A first and a second electrode assembly may be provided coupled to each other, wherein a first set of first and second conductive plates is provided on an outer surface of the first electrode assembly and a second set of first and second conductive plates is provided on an outer surface of the second electrode assembly.

The support plate may comprise a first and a third conductive plate, the first conductive plate being electrically connected to the first or second uncoated region of the one of the at least one electrode assembly, and the third conductive plate being provided on an opposing side of the one of the at least one electrode assembly with respect to the first conductive plate and being electrically connected to the same uncoated region as the first conductive plate.

In one embodiment, a first and a second electrode assembly are provided coupled to each other and a first conductive plate is provided on an outer surface of the first electrode assembly and being electrically connected to the second uncoated region of the first electrode assembly, and a third conductive plate is provided on an outer surface of the second electrode assembly and being electrically connected the second uncoated region of the second electrode assembly.

An insulating member is preferably interposed between a first conductive plate and a second conductive plate.

The first portion is preferably arranged in parallel to a main portion of the respective electrode assembly and the second portion is arranged in parallel to the first or second uncoated region of the respective electrode assembly.

The conductive plate may be provided with a third portion connecting the first portion with the second portion and being angled with respect to the first portion and/or the second portion.

In another embodiment, a secondary battery includes a case; an electrode assembly housed in the case, wherein the electrode assembly includes a first electrode, a second electrode and a separator between the first and second electrodes, wherein the first electrode has a coating portion coated with an active material and a non-coating portion absent the active material; and a support plate between the electrode assembly and the case, the support plate including a first conductive plate having at least one second portion, wherein the first conductive plate is electrically coupled to the electrode assembly by the at least one second portion such that the at least one second portion covers less than an entire section of the non-coating portion.

Throughout the invention, the at least one conductive plate is preferably made of metal.

In the secondary battery according to the embodiments, since the support plate includes cutoff portions, the non-coating portions of the electrode assembly are directly exposed to the outside through the cutoff portions. Thus, the exposed non-coating portions of the electrode assembly and the electrode terminals inserted into the exposed non-coating portions are easily welded to each other to improve the strength between the electrode assembly and the electrode terminals.

Also, since the support plate includes the cutoff portions, the first sections of the support plate are divided into two sections. In one embodiment, the divided two sections of the first sections are spaced from each other with the cutoff portions therebetween. Thus, the welding energy is concentrated into only the first sections during the welding process to improve the strength between the support plate and the electrode assembly.

### BRIEF DESCRIPTION OF THE DRAWINGS

FIGS. 1A through 1C illustrate perspective, longitudinal sectional, and cross sectional views, respectively, of a secondary battery according to an embodiment of the present invention.

FIGS. 2A and 2B illustrate enlarged views of portions 2a and 2b of FIG. 1C.

FIGS. 3A and 3B illustrate perspective views of a relationship between an electrode assembly and a support plate in a secondary battery according to an embodiment of the present invention.

FIGS. 4A through 4D illustrate views of an electrode assembly preparation process, an electrode assembly welding process, a welding process of an electrode assembly and a support plate, and a welding process of the electrode assembly and an electrode terminal, respectively, in a secondary battery according to an embodiment of the present invention.

FIGS. 5A and 5B illustrate a cross sectional view of a secondary battery and a perspective view of a relationship between an electrode assembly and a support plate, respectively, according to another embodiment of the present invention.

FIGS. 6A and 6B illustrate longitudinal sectional and cross sectional views of a secondary battery according to another embodiment of the present invention, respectively, and FIG. 6C illustrates a perspective view of a relationship between an electrode assembly and a support plate.

FIG. 7A illustrates a longitudinal sectional view of a secondary battery according to another embodiment of the present invention, and FIG. 7B illustrates a perspective view of a relationship between an electrode assembly and a support plate of the secondary battery of FIG. 7A.

FIG. 8 illustrates an exploded perspective view of a relationship between an electrode assembly and a support plate in a secondary battery according to still another embodiment of the present invention.

FIG. 9 illustrates an exploded perspective view of a relationship between an electrode assembly and a support plate in a secondary battery according to yet another embodiment of the present invention.

FIG. 10 illustrates an exploded perspective view of a relationship between an electrode assembly and a support plate in a secondary battery according to still another embodiment of the present invention.

FIG. 11 illustrates an exploded perspective view of a relationship between an electrode assembly and a support plate in a secondary battery according to yet another embodiment of the present invention.

FIG. 12 illustrates an exploded perspective view of a relationship between an electrode assembly and a support plate in a secondary battery according to still another embodiment of the present invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art.

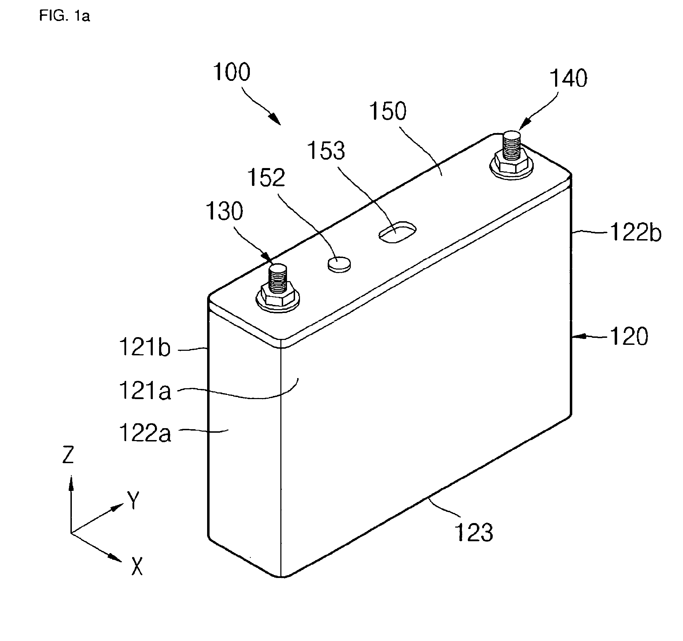

FIGS. 1A through 1C illustrate perspective, longitudinal sectional, and cross sectional views, respectively, of a secondary battery according to an embodiment.

A secondary battery 100 according to an embodiment includes an electrode assembly 110, a case 120, a first electrode terminal 130, a second electrode terminal 140, a cap plate 150, and a support plate 160. The case 120 may be a can.

The electrode assembly 110 includes a first electrode 111, a second electrode 112, and a separator 113. The electrode assembly 110 may have a shape wound in an approximately jelly-roll type or a stacked shape. The first electrode 111 may be a positive electrode plate, and the second electrode 112 may be a negative electrode plate. On the other hand, the first electrode 111 may be a negative electrode plate, and the second electrode 112 may be a positive electrode plate. The first electrode 111 includes a first metal foil and a first active material. When the first electrode 111 is the positive electrode plate, the first metal foil may be formed of aluminum, and the first active material may be lithium-based oxide. Also, the second electrode 112 includes a second metal foil and a second active material. When the second electrode 112 is the negative electrode plate, the second metal foil may be formed of copper, and the second active material may be graphite. However, embodiments of the present invention are not limited to these materials. The separator 113 is located between the first electrode 111 and the second electrode 112. The separator 113 may be formed of one of any materials such as porous polyethylene (PE) and polypropylene (PP) or its equivalent, but is not limited thereto. The separator may be substantially located on both side surfaces of the first electrode 111 or the second electrode 112. The separator 113 is located at an outermost side to prevent a portion of the electrode assembly 110 from being short-circuited to the case 120, the cap plate 150, and the support plate 160.

Furthermore, the first electrode 111 may include a first non-coating portion 111c on which a positive electrode active material is not coated. The first non-coating portion 111 c may protrude through one side of the separator 113 to the outside. Also, the second electrode 112 may include a second non-coating portion 112c on which a negative electrode active material is not coated. The second non-coating portion 112c may protrude through the other side of the separator 113 to the outside. In one embodiment, the first non-coating portion 111 c and the second non-coating portion 112c may protrude in directions opposite to each other with respect to the separator 113.

The case 120 has two wide side surfaces 121 a and 121 b, two narrow side surfaces 122a and 122b, and one bottom surface 123. Also, the case 120 has an opened upper side. The electrode assembly 110 is received into the case 120 together with an electrolyte. In one embodiment, the first non-coating portion 111c and the second non-coating portion 112c of the electrode assembly 110 face the two narrow side surfaces 122a and 122b, respectively. Also, the case 120 may be formed of one of any materials such as aluminum, copper, iron, SUS, ceramic, and polymer, or equivalents thereof, but is not limited thereto.

The first electrode terminal 130 and the second electrode terminal 140 are electrically coupled to the first electrode 111 and the second electrode 112 of the electrode assembly 110, respectively. In one embodiment, the first electrode terminal 130 may be welded to the first electrode 111, and the second electrode terminal 140 may be welded to the second electrode 112. Furthermore, the first electrode terminal 130 is welded to the first non-coating portion 111c of the first electrode 111. Also, the second electrode terminal 140 may be welded to the second non-coating portion 112c of the second electrode 112.

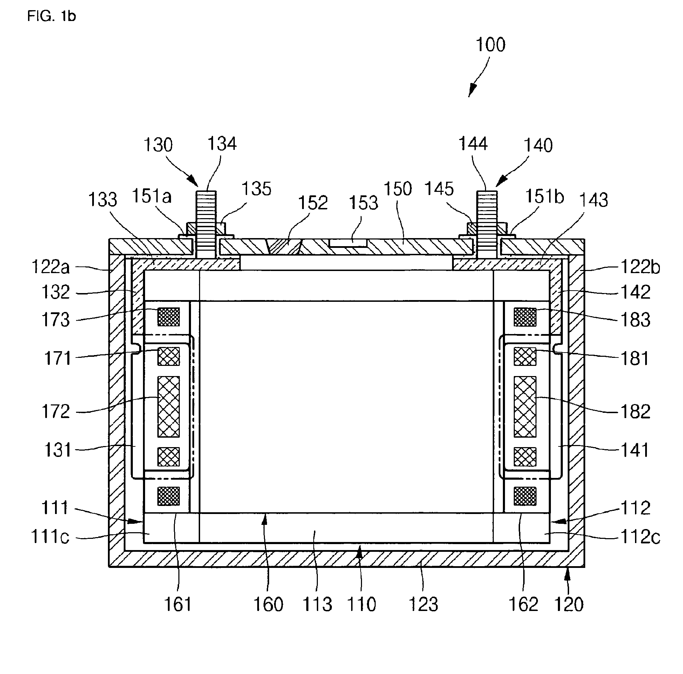

A reference numeral 171 of FIG. 1B represents a region at which the first non-coating portions 111c of the first electrode 111 of the electrode assembly 110 are welded together. A reference numeral 172 represents a region at which the first non-coating portion 111 c of the first electrode 111 of the electrode assembly 110 is welded to the first electrode terminal 130. Also, a reference numeral 173 represents a region at which the support plate 160 is welded to the first non-coating portion 111c of the first electrode 111. Here, since the first non-coating portions 111 c are welded together, the first non-coating portions 111 care closely attached or compressed against each other.

A reference numeral 181 of FIG. 1B represents a region at which the second non-coating portions 112c of the second electrode 112 of the electrode assembly 110 are welded together. A reference numeral 182 represents a region at which the second non-coating portion 112c of the second electrode 112 of the electrode assembly 110 is welded to the second electrode terminal 140. Also, a reference numeral 183 represents a region at which the support plate 160 is welded to the second non-coating portion 112c of the second electrode 112. Here, since the second non-coating portions 112c are welded together, the second non-coating portions 112c are closely attached or compressed against each other.

Also, the first electrode terminal 130 includes a weld part 131, a first extension part 132, a second extension part 133, and a bolt extension part 134. The weld part 131 is inserted into the first electrode 111 of the electrode assembly 110, i.e., it is inserted between adjacent first non-coating portions 111 c by a certain depth. In one embodiment, the weld part 141 is welded to the first non-coating portion 111 c. Also, the second electrode terminal 140 includes a weld part 141, a first extension part 142, a second extension part 143, and a bolt extension part 144. The weld part 141 is inserted into the second electrode 112 of the electrode assembly 110, i.e., it is inserted between adjacent first non-coating portions 111 c by a certain depth. In one embodiment, the weld part 141 is welded to the second non-coating portion 112c. Furthermore, each of the bolt extension parts 134 and 144 of the first electrode terminal 130 and the second electrode terminal 140 passes through the cap plate 150 to protrude to the outside.

The cap plate 150 covers the case and allows the first electrode terminal 130 and the second electrode terminal 140 to protrude to the outside. Here, a boundary or seam between the cap plate 150 and the case 120 may be welded using a laser. In addition, each of the bolt extension parts 134 and 144 of the first electrode terminal 130 and the second electrode terminal 140 passes through the cap plate 150, and insulation materials 151 a and 151 b may be located on outer circumference of the bolt extension parts 134 and 144, respectively. Thus, the first electrode terminal 130 and the second electrode terminal 140 are electrically insulated from the cap plate 150. Due to these constitutes, the case 120 and the cap plate 150 may have a property of electrical neutrality. In one embodiment, the case 120 and the cap plate 150 does not have a polarity (positive or negative pole), but, as described below, in some cases, the case 120 and the cap plate 150 may have polarities.

Furthermore, nuts 135 and 145 are coupled to the bolt extension parts 134 and 144 of the first electrode terminal 130 and the second electrode terminal 140, respectively. Thus, the first electrode terminal 130 and the second electrode terminal 140 are firmly fixed to the cap plate 150. Furthermore, an electrolyte plug 152 may be coupled to the cap plate 150. Also, a safety vent 153 having a relatively thin thickness may be located on the cap plate 150. The cap plate 150 may be formed of the same material as the case 120.

The support plate or short circuit member 160 is located between the electrode assembly 110 and the case 120. In one embodiment, the support plate 160 is located between the electrode assembly 110 and at least one wide side surface 121 a of the case 120.

The support plate 160 includes a first conductive plate 161, a second conductive plate 162, and an insulation plate 163 located between the first conductive plate 161 and the second conductive plate 162. The first conductive plate 161 is electrically coupled to the first non-coating portion 111c of the first electrode 111. In one embodiment, the first conductive plate 161 is welded to the first non-coating portion 111c. The second conductive plate 162 is electrically coupled to the second non-coating portion 112c of the second electrode 112. In one embodiment, the second conductive plate 162 is welded to the second non-coating portion 112c. The insulation plate 163 prevents the first conductive plate 161 and the second conductive plate 162 from being electrically short-circuited to each other not before the support plate 160 is activated, e.g. by puncture or collapse of the battery 100. Furthermore, an insulation plate 164 is located between the support plate 160 and the case 120. The insulation plate 164 prevents the first conductive plate 161 and the case 120 from being electrically short-circuited to each other until the support plate 160 is activated, e.g. by puncture or collapse of the battery 100.

Thus, since the support plate 160 includes cutoff portions 161d and 162d between first sections 161 a, the non-coating portions 111 c and 112c of the electrode assembly 110 are directly exposed to the outside through the cutoff portions 161d and 162d. Thus, the exposed non-coating portions 111 c and 112c of the electrode assembly 110 and the electrode terminals 130 and 140 inserted into the exposed non-coating portions 111c and 112c are easily welded to each other to improve the strength between the electrode assembly 110 and the electrode terminals 130 and 140.

Also, since the support plate includes the cutoff portions 161 d and 162d, the first sections 161 a and 162a of the support plate 160 are divided into two sections. In one embodiment, the divided two sections of the first sections 161 a and 162a are spaced from each other with the cutoff portions 161 d and 162d therebetween. Thus, the welding energy is concentrated into the first sections 161 a and 162a during the welding process to improve the strength between the support plate 160 and the electrode assembly 110.

As described above, when the secondary battery 100 is punctured or collapsed, the insulation plate 163 is torn or damaged to electrically short-circuit the first conductive plate 161 from the second conductive plate 162 of the support plate 160. Since the first conductive plate 161 and the second conductive plate 162 of the support plate 160 have relatively low electric resistances, minimal heat is generated and large current is quickly consumed when they are short-circuited. As a result, safety and reliability of the secondary battery 100 may be improved.

Also, since the support plate 160 is configured in a relatively thick plate shape between the electrode assembly 110 and the case 120, the support plate 160 may support the electrode assembly 110 and prevent the case 120 from swelling.

Furthermore, since the support plate 160 is bent to generally correspond to the shape of an exterior surface of the electrode assembly 110, the support plate 160 closely attached to the surface of the electrode assembly 110. In other words, the support plate 160 is formed to mimic the shape of the exterior surface of the electrode assembly. Thus, the first conductive plate 161 of the support plate 160 may be easily welded to the first non-coating portion 111c to improve the weld strength. Also, the second conductive plate 162 of the support plate 160 may be easily welded to the second non-coating portion 112c to improve the weld strength.

Also, since the support plate 160 is bent to mimic the shape of the exterior surface of the electrode assembly, there is no bias force against the support plate. Thus, the weld strength between the first electrode terminal 130 and the first non-coating portion 111c and between the second electrode terminal 140 and the second non-coating portion 112c does not deteriorate over time.

Here, if the support plate is welded to the first and second non-coating portions of the electrode assembly in a flat plate shape, and not a bent shape, the support plate is forcedly curved and a bias force returning the plate to its natural shape may occur. Thus, the weld strength between the support plate and the electrode assembly may be deteriorated. In addition, the weld strength between the electrode terminal and the electrode assembly may be deteriorated.

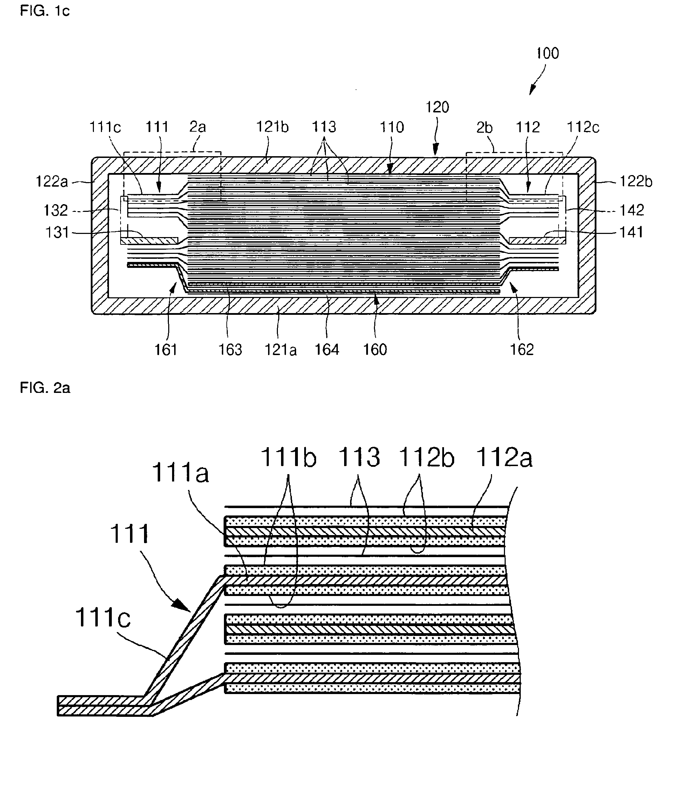

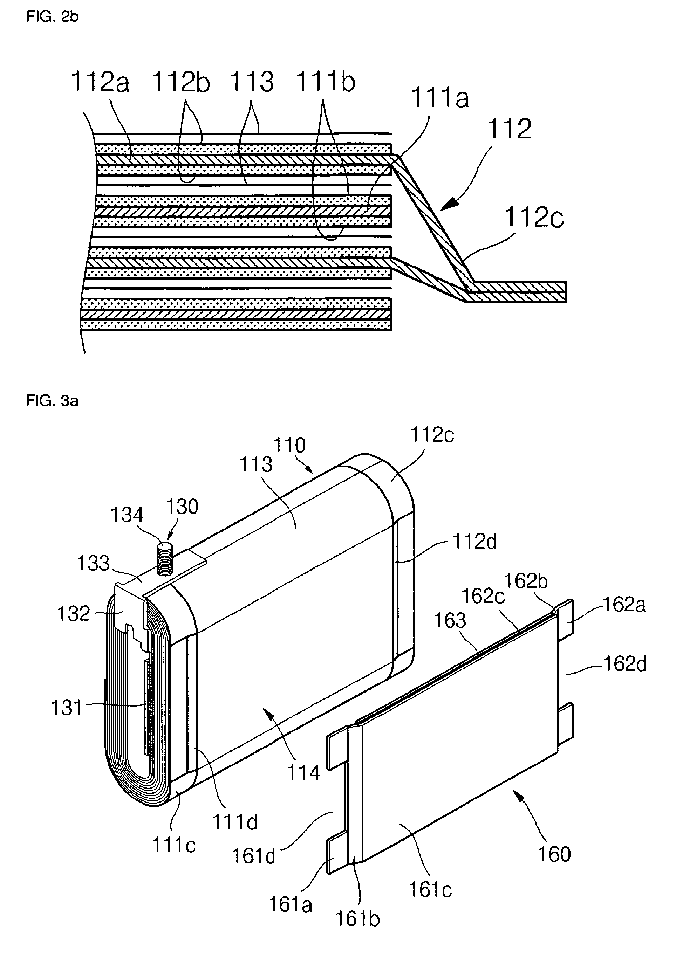

FIGS. 2A and 2B illustrate enlarged views of portions 2a and 2b of FIG. 1C.

Referring to FIG. 2A, the electrode assembly 110 includes the first electrode 111. The first electrode 111 includes a first metal foil 111 a (e.g., aluminum foil or aluminum mesh), a first active material 111 b (e.g., lithium-based oxide), and the first non-coating portion 111 c on which a first active material is not coated.

Also, the electrode assembly 110 includes the second electrode 112. The second electrode 112 includes a second metal foil 112a (e.g., copper foil), a second active material 112b (e.g., graphite), and the second non-coating portion 112c on which a second active material is not coated. Furthermore, the separators 113 formed of PP or PE are located on both side surfaces of the first electrode 111, and the separators 113 formed of PP or PE are located on both side surfaces of the second electrode 112.

Here, the first non-coating portion 111c extends through one side of the separator 113 to the outside. The first non-coating portions 111 c are closely attached and welded to each other to improve the weldability between the weld part 131 of the first electrode terminal 130 and the first conductive plate 161 of the support plate 160.

Also, the second non-coating portion 112c extends through the other side of the separator 113 to the outside. The second non-coating portions 112c are closely attached and welded to each other to improve weldability between the weld part 141 of the second electrode terminal 140 and the second conductive plate 162 of the support plate 160.

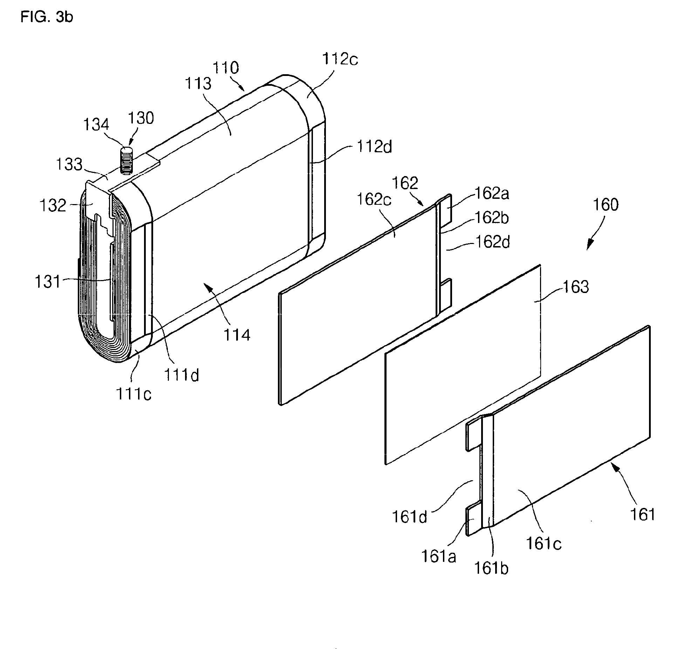

FIGS. 3A and 3B illustrate perspective views of a relationship between an electrode assembly and a support plate in a secondary battery according to an embodiment of the present invention.

Referring to FIGS. 3A and 3B, the support plate 160 includes the first conductive plate 161 electrically coupled to the first non-coating portion 111 c of the first electrode 111, the second conductive plate 162 electrically coupled to the second non-coating portion 112c of the second electrode 112, and the insulation plate 163 located between the first conductive plate 161 and the second conductive plate 162.

The first conductive plate 161 includes a first section 161 a welded to the first non-coating portion 111c, a second section 161 b extending and bent from the first section 161 a, and a third section 161 c extending and bent from the second section 161 b and covering a front wide side surface 114 of the electrode assembly 110. Here, a total horizontal width of the first section 161 a and the second section 161 b is almost equal to a horizontal width of the first non-coating portion 111 c. The third section 161 c has an area almost equal to that of the front wide side surface 114 of the electrode assembly 110. Also, a cutoff portion 161 d is located on the first section 161 a, wherein a certain region of the first non-coating portion 111 c is exposed to the outside through the cutoff portion 161 d. Thus, the first non-coating portion 111c of the electrode assembly 110 and a first weld part 131 of a first electrode terminal 130 are easily welded to each other. In one embodiment, since a welding tool can be located on the cutoff portion 161 d, the first non-coating portion 111 c of the electrode assembly 110 and the first weld part 131 of the first electrode terminal 130 may be easily welded to each other. Also, since the first section 161 a is directly welded to the first non-coating portion 111c, the first section 161 a is electrically coupled to the first non-coating portion 111 c. Furthermore, the second section 161 b connects the first section 161 a to the third section 161 c and is bent at a certain angle. Thus, the first section 161 a is closely attached to the first non-coating portion 111c by the second section 161 b, and the third section 161c is closely attached to the front wide side surface 114 of the electrode assembly 110. In one embodiment, the first non-coating portions 111c are closely attached and compressed against each other to improve weldability with the first weld part 131. Thus, a bent section 111 d is located on the first non-coating portion 111c, and thereby is closely attached to the second section 161 b of the first conductive plate 161.

As described above, the first section 161 a is closely attached to the first non-coating portion 111c, and the third section 161 c is closely attached to the front wide side surface 114 of the electrode assembly 110. Substantially, the third section 161c is firstly closely attached to the insulation plate 163. The first conductive plate 161 may be formed of aluminum (AI) or copper (Cu), but is not limited thereto. When the first non-coating portion 111 c is formed of aluminum, the first conductive plate 161 may also be formed of aluminum. Also, the first conductive plate 161 may have a thickness of about 50 pm to about 400 µm. Within the range of the thickness value, a temperature increase of the secondary battery is relatively low when the secondary battery is short-circuited due to the puncture or collapse. In addition, although the first conductive plate 161 is provided as a single sheet in this embodiment, the first conductive plate 161 may be provided in plurality.

The insulation plate 163 is located between the first conductive plate 161 and the second conductive plate 162. The insulation plate 163 does not allow the first conductive plate 161 and the second conductive plate 162 to be electrically coupled to each other before the support plate 160 is activated. Substantially, the insulation plate 163 may be formed of the same material as the separator. In one embodiment, the insulation plate 163 may be formed of PE or PP, but is not limited thereto.

The second conductive plate 162 includes a first section 162a welded to the second non-coating portion 112c, a second section 162b extending and bent from the second section 162a, and a third section 162c extending from the second section 162b and covering the front wide side surface 114 of the electrode assembly 110. Here, a total horizontal width of the first section 162a and the second section 162b is almost equal to a horizontal width of the second non-coating portion 112c. The third section 162c has an area almost equal to that of the front wide side surface 114 of the electrode assembly 110. Also, a cutoff portion 162d is located on the first section 162a. The second non-coating portion 112c is exposed to the outside through the cutoff portion 162d. Thus, the second non-coating portion 112c of the electrode assembly 110 and a second weld part 141 of the second electrode terminal 140 are easily welded to each other. Also, since the first section 162a is directly welded to the second non-coating portion 112c, the first section 162a is electrically coupled to the second non-coating portion 112c. Furthermore, the second section 162b connects the first section 162a to the third section 162c and is bent at a certain angle. Thus, the first section 162a is closely attached to the second non-coating portion 112c by the second section 162b, and the third section 162c is closely attached to the front wide side surface 114 of the electrode assembly 110. In one embodiment, the second non-coating portions 112c are closely attached and compressed against each other to improve weldability with the second weld part 141. Thus, the bent section 112d is necessarily located on the second non-coating portion 112c, thereby is closely attached to the second section 162b of the second conductive plate 112. As described above, the first section 162a is closely attached to the second non-coating portion 112c, and the third section 162c is closely attached to the front wide side surface 114 of the electrode assembly 110. The second conductive plate 162 may be formed of aluminum (AI) or copper (Cu), but is not limited thereto. When the second non-coating portion 112c is formed of copper, the second conductive plate 162 may be formed of copper. Also, the second conductive plate 162 may have a thickness of about 50 pm to about 400 µm. Within the range of the thickness value, a temperature increase of the secondary battery is relatively low when the secondary battery is short-circuited due to the puncture or collapse. In addition, although the second conductive plate 162 is provided as a single sheet in this embodiment, the second conductive plate 162 may be provided in plurality.

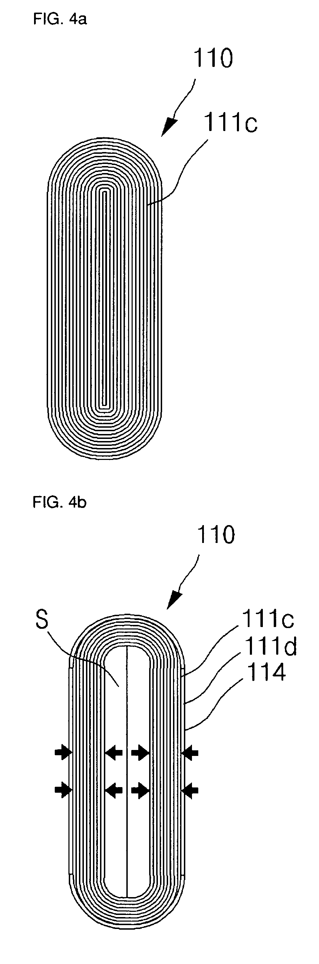

FIGS. 4A through 4D illustrate views of an electrode assembly preparation process, an electrode assembly welding process, a welding process of an electrode assembly and a support plate, and a welding process of the electrode assembly and an electrode terminal, respectively, in a secondary battery according to an embodiment.

Referring to FIG. 4A, in an electrode assembly preparation process, for example, first non-coating portions 111 c are spaced a certain distance from each other. Also, an electrode assembly 110 is located between the first non-coating portions 111 c. Also, second non-coating portions are spaced a certain distance from each other, and there is only a relatively small space or no space between the second non-coating portions.

Referring to FIG. 4B, in an electrode assembly welding process, for example, both sides of the first non-coating portions 111c, which face each other, are welded together. In one embodiment, both sides of the first non-coating portions 111 c are respectively compressed, and then, the compressed sides of the first non-coating portions 111 c are welded using a welding tool. Thus, a space S is defined at an approximately central portion of the first non-coating portion 111 c of the electrode assembly 110, and a bent section 111 d is naturally formed at a front wide side surface 114 of the non-coating portion 111 c. In one embodiment, the front wide side surface 114 of the electrode assembly 110 is located at the periphery of the electrode assembly. Sequentially, the bent section 111d extending from the front wide side surface 114 is formed. Also, the first non-coating portion 111 c is located at the innermost area from the bent section 111d. Thus, when the first non-coating portions 111 c are welded together to each other, the support plate and an electrode terminal may be easily welded to each other, and a weld strength therebetween may be improved. Furthermore, a flow of large current may be improved. Here, like the first non-coating portions 111c, the second non-coating portions are compressed and then welded to each other.

In FIG. 4B, horizontal arrows represent weld points at the first non-coating portion 111c.

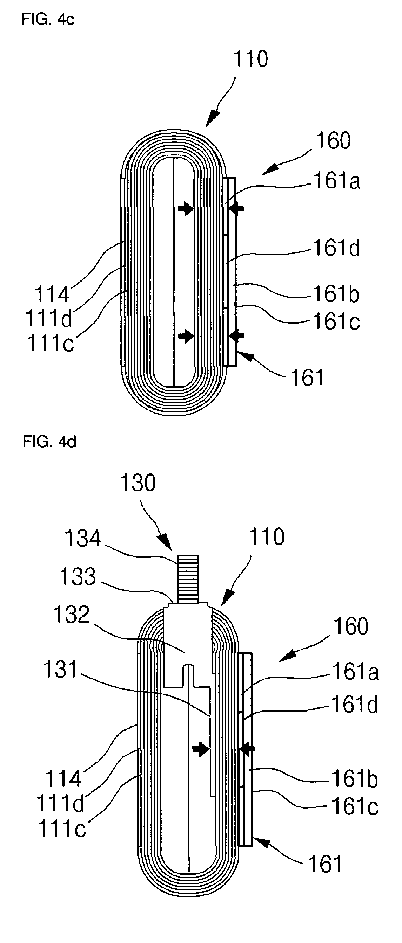

Referring to FIG. 4C, in a welding process of the electrode assembly and the support plate, a first section 161 a of a first conductive plate 161 of the support plate 160 is welded to the first non-coating portion 111c. In one embodiment, since the first non-coating portion 111 c is previously compressed, the first section 161 a and the first non-coating portion 111 c are easily welded to each other. Furthermore, since the first section 161 a, a second section 161 b, and a third section 161 c of the first conductive plate 161 are bent along a surface of the electrode assembly 110, the first section 161 a and the non-coating portion 111 c may further easily welded to each other. Also, since the first sections 161 a is spaced by a cutoff portion 161 d, a welding energy due to the welding tool may be concentrated close to and almost into the first section 161 a. Thus, the weld strength between the first section 161 a and the first non-coating portion 111 c may be further improved.

Here, like the first conductive plate 161, a second conductive plate is welded to the second non-coating portion.

In FIG. 4C, horizontal arrows represent weld points of the first non-coating portion 111 c and the support plate 160.

Referring to FIG. 4D, in the welding process of the electrode assembly and the electrode terminal, a weld part 131 and the first non-coating portion 111 c are welded together using the welding tool in a state where the weld part 131 of the first electrode terminal 130 is closely attached to a side of the first non-coating portion 111 c. Here, since the welding tool contacts the first non-coating portion 111 c through the cutoff portion 161 d formed between the first section 161 a of the first conductive plate 161 and the first non-coating portion 111 c of the electrode assembly, the weld part 131 of the first electrode terminal 130 and the first non-coating portion 111 c of the electrode assembly 110 are easily welded. Thus, the weld strength between the weld part 131 of the first electrode terminal 130 and the first non-coating portion 111 c of the electrode assembly 110 may be further improved.

Here, like the first electrode terminal 130, the second terminal is welded to the second non-coating portion.

In FIG. 4D, horizontal arrows represent weld points of the first non-coating portion 111c and the weld part 131 of the electrode terminal 130.

As described above, the non-coating portion of the electrode assembly is directly exposed to the outside through the cutoff portion. Thus, the exposed non-coating portion of the electrode assembly and the electrode terminal are easily welded to each other to improve the strength between the electrode assembly and the electrode terminals.

Also, the first section of the support plate is divided into two sections and spaced from each other with the cutoff portion therebetween. Thus, the welding energy is concentrated into the first sections during the welding process to improve the strength between the support plate and the electrode assembly 110.

Also, since the support plate is bent along the surface of the electrode assembly, the support plate is naturally and closely attached to the surface of the electrode assembly 110. In one embodiment, there is no bias force at the support plate, and thus, welding workability and the weld strength between the first electrode terminal 130 and the first non-coating portion 111 c may be improved. Furthermore, since the bias or restoring force does not exist at the support plate, the weld strength between the second electrode terminal 140 and the second non-coating portion 112c is not deteriorated.

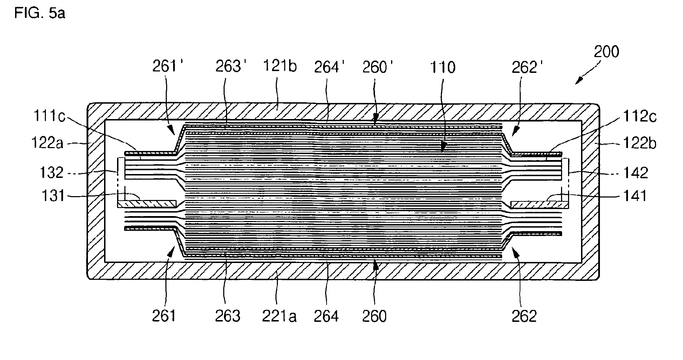

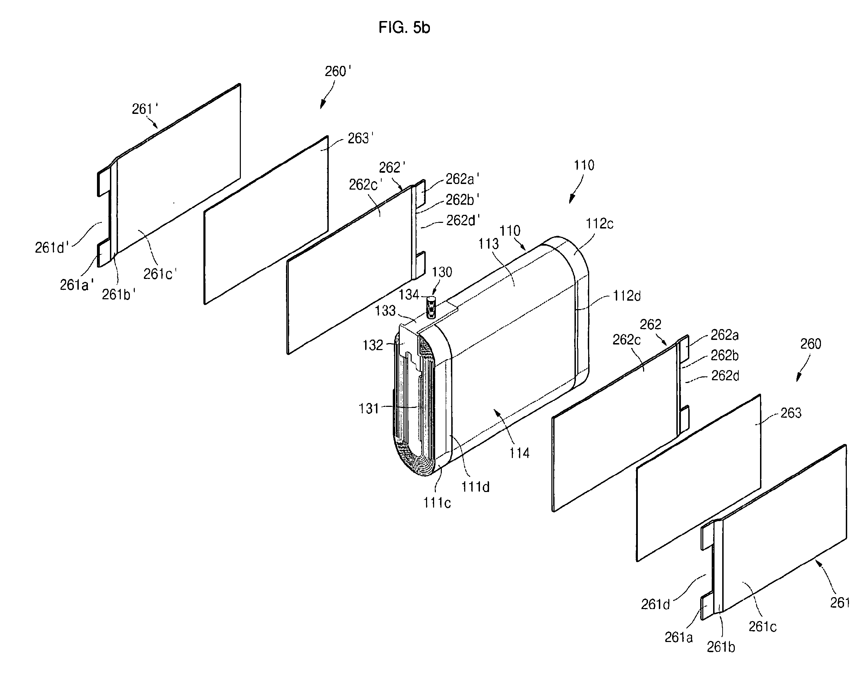

FIGS. 5A and 5B illustrate a cross sectional view of a secondary battery and a perspective view of a relationship between an electrode assembly and a support plate according to another embodiment, respectively.

Referring to FIGS. 5A and 5B, a secondary battery 200 according to an embodiment may include two support plates 260 and 260'. In one embodiment, the first support plate 260 may be located on a front wide side surface 114 of an electrode assembly 110, and the second support plate 260' may be located on a rear wide side surface opposite the front wide surface of the electrode assembly 110. As described above, the first and second support plates 260 and 260' include first conductive plates 261 and 261' and second conductive plates 262 and 262', and insulation plates 263 and 263', respectively.

The first conductive plates 261 and 261' of the first and second support plates 260 and 260' are electrically coupled to a first non-coating portion 111c, respectively, and the second conductive plates 262 and 262' are electrically coupled to a second non-coating portion 112c, respectively.

Here, the first conductive plates 261 and 261' including first sections 261 and 261' having cutoff portions 261 d and 261 d', bent second sections 261 b and 261 b', and bent third sections 261 c and 261 c', the second conductive plates 262 and 262' including first sections 262 and 262' having cutoff portions 262d and 262d', bent second sections 262b and 262b', and bent third sections 262c and 262c', and the insulation plates 263 have substantially the same configuration and interrelation as those of the above-described embodiment. Thus, their duplicated descriptions will be omitted.

As described above, in the secondary battery 200 according to this embodiment, since the support plates 260 and 260' are located between an electrode assembly 110 and the front wide side surface of a case 120 as well as between the electrode assembly 110 and the rear wide side surface 121 b of the case 120, the secondary battery 200 has improved safety against puncture and collapse.

In addition, since the support plates 260 and 260' are located at front and rear sides of the electrode assembly 110, respectively, they may effectively prevent the secondary battery from swelling.

Also, since a cutoff portion is adjacent the first section of the support plate, the weld strengths between the electrode assembly and the electrode terminal and between the electrode assembly and the support plate may be improved.

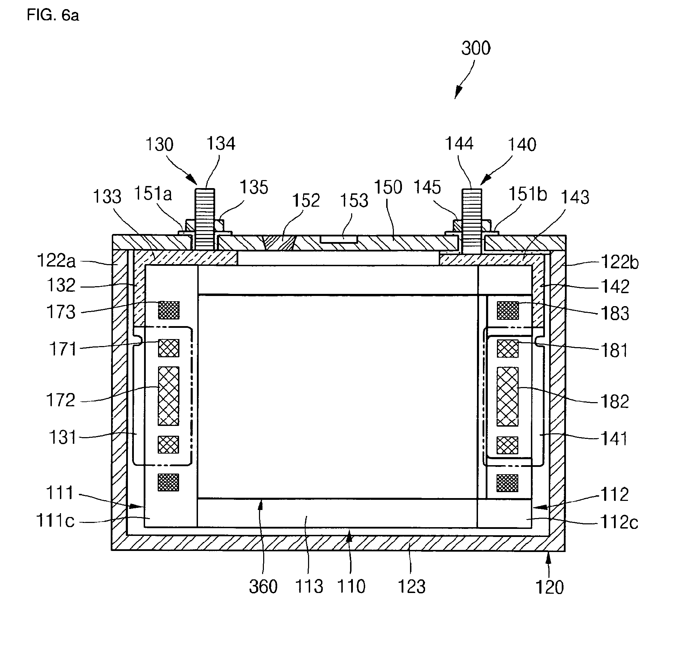

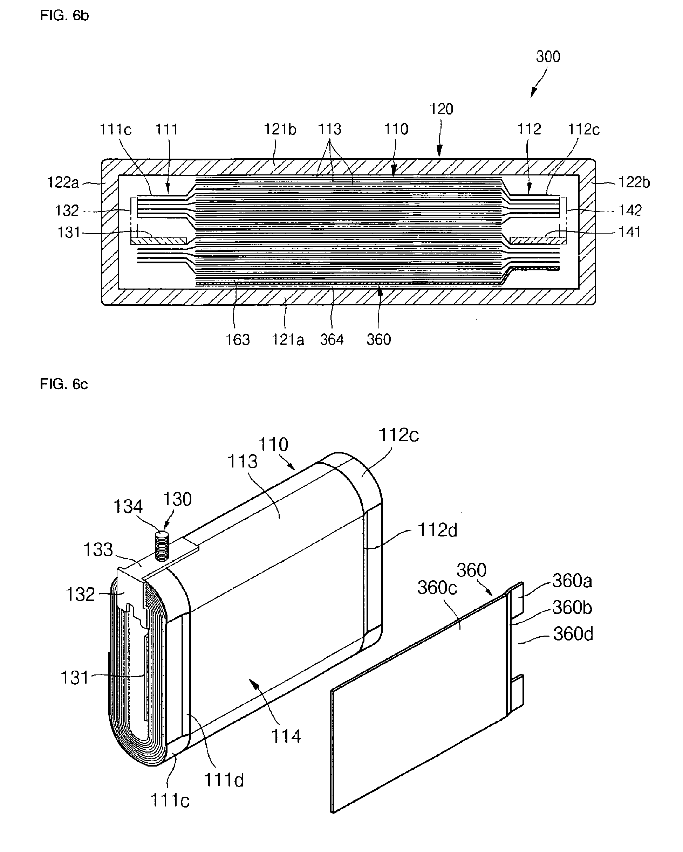

FIGS. 6A and 6B illustrate longitudinal sectional and cross sectional views of a secondary battery according to another embodiment, respectively, and FIG. 6C illustrates a perspective view of a relationship between an electrode assembly and a support plate.

Referring to FIGS. 6A through 6C, in a secondary battery 300 according to another embodiment, a support plate 360 may include only a single-sheet conductive plate.

For example, the single-sheet support plate 360 may include a first section 360a, a second section 360b, and a third section 360c. The first section 360a may be electrically coupled to a second non-coating portion 112c of an electrode assembly 110. In one embodiment, the first section 360a may be welded to the second non-coating portion 112c. Thus, the support plate 360 may have the same polarity as a second electrode 112.

In detail, the support plate 360 includes the first section 360a welded to the second non-coating portion 112c, the second section 360b extending and bent from the first section 360a, and a third section 260c extending and bent from the second section 360b and covering a front wide side surface 114 of the electrode assembly 110. Here, a cutoff portion 360d is located on the first section 360a. The second non-coating portion 112c is exposed to the outside through the cutoff portion 360d. Thus, the second non-coating portion 112c of the electrode assembly 110 and a second weld part 141 of a second electrode terminal 140 are easily welded to each other. Also, since the second section 360b is directly welded to the second non-coating portion 112c, the second section 360b is electrically coupled to the second non-coating portion 112c. Furthermore, the second section 360b connects the first section 360a to the third section 360c and is bent at a certain angle. Thus, the first section 360a is closely attached to the second non-coating portion 112c by the second section 360b, and the third section 360c is closely attached to the front wide side surface 114 of the electrode assembly 110. In one embodiment, the second non-coating portions 112c are closely attached and compressed against each other to improve weldability with the second weld part 141. As a result, a bent section 112d is naturally formed at the second non-coating portion 112c. The second section 360b is closely attached to the bent section 112d. Thus, the first section 360a is closely attached to the second non-coating portion 112c, and the third section 360c is closely attached to the front wide side surface 114 of the electrode assembly 110. The support plate 360 may be formed of aluminum (AI) or copper (Cu), but is not limited thereto. When the second non-coating portion 112c is formed of copper, the support plate 360 may also be formed of copper. Also, the support plate 360 may have a thickness of about 50 µm to about 400 pm. Within the range of the thickness value, a temperature increase of the secondary battery is relatively small when the secondary battery is short-circuited due to the puncture or collapse. In addition, although the support plate 360 is provided in a single sheet shape in this embodiment, the support plate 360 may also be provided in plurality.

For example, a case 120 may be electrically coupled to a first electrode 111 of the electrode assembly 110. In one embodiment, the case 120 may be a positive pole. In detail, a first electrode terminal 130 may directly contact a cap plate 150. Thus, the cap plate 150 may have the same polarity as the first electrode terminal 130, e.g., may be the positive pole.

On the other hand, the single-sheet support plate 360 may be electrically coupled to the first non-coating portion 111 c. Thus, the support plate 360 may be the positive pole equal to that of the first electrode 111. In one embodiment, the case 120 may be electrically coupled to a second electrode 112 of the electrode assembly 110. In one embodiment, the case 120 may be a negative pole. In detail, the second electrode terminal 140 may directly contact the cap plate 150. Thus, the cap plate 150 may have the same polarity as the second electrode terminal 140, i.e., it may be the negative pole.

As described above, the single-sheet support plate 360 and the case 120 have polarities opposite to each other. Here, since an insulation plate 364 is located between the one-sheet support plate 360 and the case 120, the support plate 360 may be electrically isolated from the case 120.

As described above, when the secondary battery 300 is punctured or collapsed, the insulation plate 364 is torn or damaged to directly short-circuit the support plate 360 from the case 120. Since the support plate 360 and the case 120 have relatively low electric resistances, minimal heat is generated and large current is quickly consumed when they are short-circuited. As a result, safety and reliability of the secondary battery 300 may be improved.

Since the cutoff portion is adjacent to the first section of the support plate, weld strengths between the electrode assembly and the electrode terminal and between the electrode assembly and the support plate may be improved.

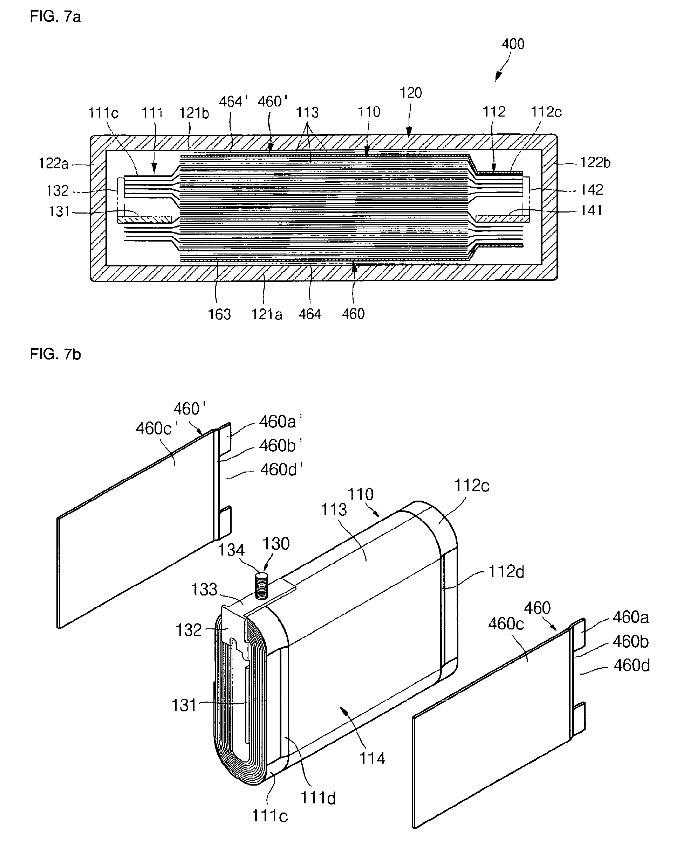

FIG. 7A illustrates a longitudinal sectional view of a secondary battery according to another embodiment, and FIG. 7B illustrates a perspective view of a relationship between an electrode assembly and a support plate.

Referring to FIGS. 7A and 7B, a secondary battery 400 according to another embodiment may include two support plates 460 and 460'. In one embodiment, the first support plate 460 may be located on a front wide side surface 114 of an electrode assembly 110, and the second support plate 460' may be located on a rear wide side surface opposite the front wide side surface of the electrode assembly 110. The first and second support plates 460 and 460' may include first sections 460a and 460a' having cutoff portions 460d and 460d', bent second sections 460b and 460b', and bent third sections 460c and 460c', respectively. Additionally, the secondary battery 400 may include an insulation plate 464'.

The first sections 460a and 460a' of the first and second support plates 460 and 460' are electrically coupled to a second non-coating portion 112c. In one embodiment, the first sections 460a and 460a' of the first and second support plates 460 and 460' may be welded to the second non-coating portion 112c.

As described above, in the secondary battery 400, since the first support plate 460 is located between the electrode assembly 100 and a front wide side surface 121 a of a case 120 and the second support plate 460' is located between the electrode assembly 100 and a rear wide side surface 121 b of the case 120, the secondary battery 400 may have improved safety against puncture and collapse. In addition, since the support plates 460 and 460' are located at front and rear sides of the electrode assembly 110, respectively, they may effectively prevent the secondary battery from swelling.

Also, since a cutoff portion is located adjacent the first section of the support plate, the weld strengths between the electrode assembly and the electrode terminal and between the electrode assembly and the support plate may be improved.

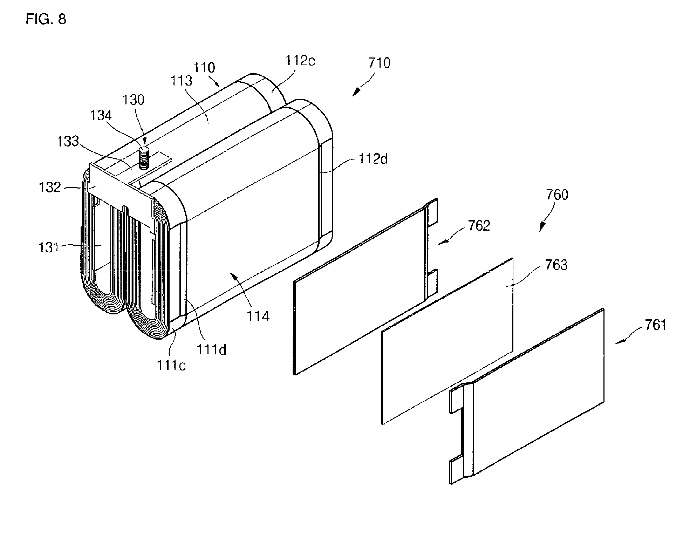

FIG. 8 illustrates an exploded perspective view of a relationship between an electrode assembly and a support plate in a secondary battery according to another embodiment.

Referring to FIG. 8, two or more electrode assemblies 710 may be provided. A first electrode terminal 130 and a second electrode terminal are electrically coupled to the two or more electrode assemblies 710. For example, the first electrode terminal 130 may include a weld part 131, a first extension part 132, a second extension part 133, and a bolt extension part 134. Also, the first electrode terminal 130 is electrically coupled to a first non-coating portion 111 c located on each of the two electrode assemblies 710. The second electrode terminal has the same structure as the first electrode terminal 130. The second electrode terminal is electrically coupled to a second non-coating portion 112c located on each of the two electrode assemblies 710.

A support plate 760 may be located on any one of front wide side surfaces 114 of the two electrode assemblies 710. The support plate 760 includes a first conductive plate 761, a second conductive plate 762, and an insulation plate 763. Substantially, the support plate 760 may be located between either or both of the front wide side surfaces 114 of the two electrode assemblies 710 and a case.

As above-described, another embodiment may provide a secondary battery having large-capacity as well as improved safety against puncture and collapse. In addition, it may effectively prevent the secondary battery from swelling.

Also, since a cutoff portion is located adjacent the first section of the support plate, the weld strengths between the electrode assembly and the electrode terminal and between the electrode assembly and the support plate may be improved.

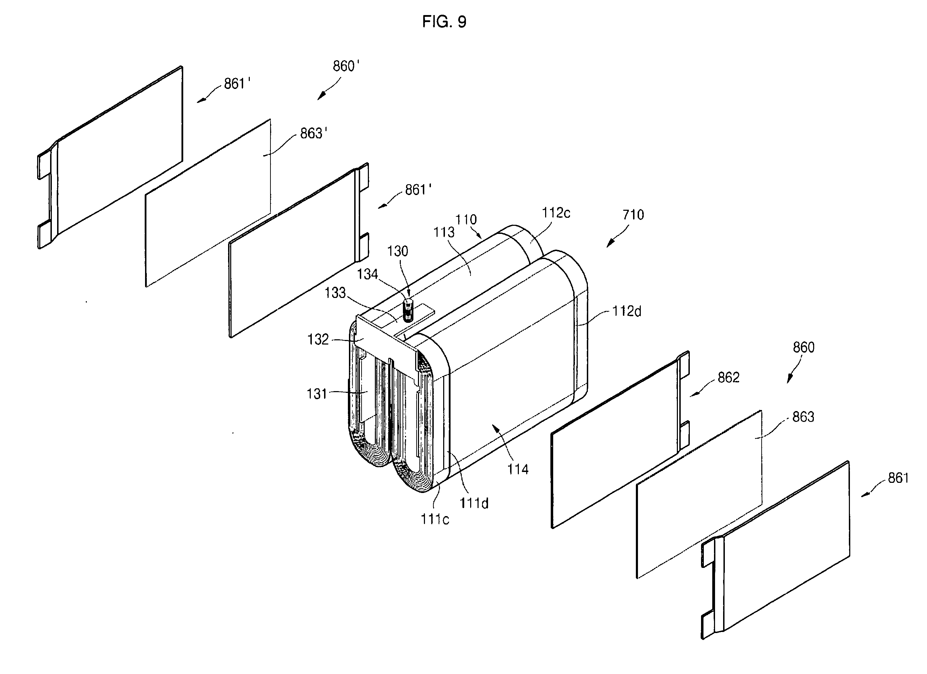

FIG. 9 illustrates an exploded perspective view of a relationship between an electrode assembly and a support plate in a secondary battery according to another embodiment of the present invention.

Referring to FIG. 9, two or more electrode assemblies 710 may be provided. A first electrode terminal 130 and a second electrode terminal are electrically coupled to the two or more electrode assemblies 710.

A first support plate 860 may be located on any one of front wide side surfaces 114 of the two electrode assemblies 710, and a second support plate 860' may be located on the other rear wide side surface of the two electrode assemblies 710. The first support plate 860 includes a first conductive plate 861, a second conductive plate 862, and an insulation plate 863. The second support plate 860' includes a first conductive plate 861', a second conductive plate 862', and an insulation plate 863'.

As above-described, since the first support plate 860 is located between the electrode assembly and the front wide side surface of a case and the second support plate 860' is located between the electrode assembly and the rear wide side surface of the case, a secondary battery having the further improved safety against puncture and collapse may be provided. In addition, swelling of the secondary battery may be prevented.

Also, since a cutoff portion is located adjacent the first section of the support plate, the weld strengths between the electrode assembly and the electrode terminal and between the electrode assembly and the support plate may be improved.

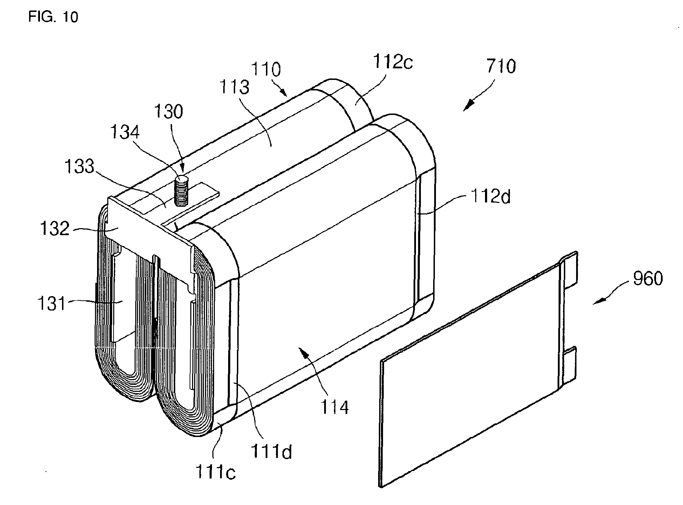

FIG. 10 illustrates an exploded perspective view of a relationship between an electrode assembly and a support plate in a secondary battery according to another embodiment of the present invention.

Referring to FIG. 10, two or more electrode assemblies 710 may be provided. Furthermore, one-sheet support plate 960 may be located on any one of front wide side surfaces of the two electrode assemblies 710.

Thus, a secondary battery may have large-capacity as well as improved safety against puncture and collapse. In addition, the support plate 960 may effectively prevent the secondary battery from swelling.

Also, since a cutoff portion is located adjacent the first section of the support plate, the weld strengths between the electrode assembly and the electrode terminal and between the electrode assembly and the support plate may be improved.

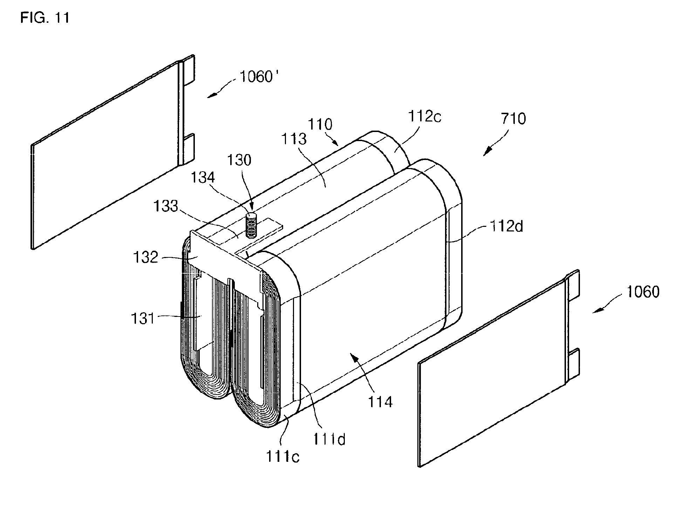

FIG. 11 illustrates an exploded perspective view of a relationship between an electrode assembly and a support plate in a secondary battery according to another embodiment of the present invention.

Referring to FIG. 11, two or more electrode assemblies 710 may be provided. Furthermore, a first support plate 1060 may be located on any one of front wide side surfaces of the two or more electrode assemblies 710, and a second support plate 1060' may be located on the other one of rear wide side surface of the two electrode assemblies 710.

Thus, a secondary battery may have large-capacity as well as improved safety against puncture and collapse. In addition, the support plate 1060 may effectively prevent the secondary battery from swelling.

Also, since a cutoff portion is located adjacent the first section of the support plate, the weld strengths between the electrode assembly and the electrode terminal and between the electrode assembly and the support plate may be improved.

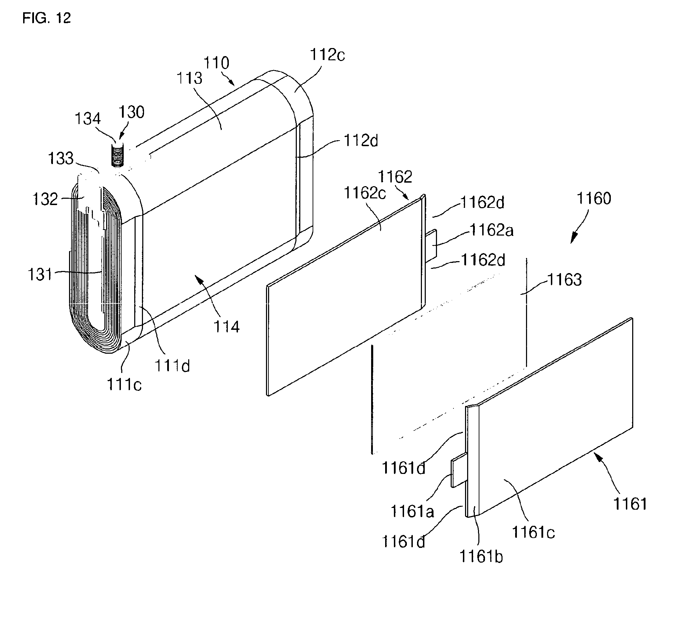

FIG. 12 illustrates an exploded perspective view of a relationship between an electrode assembly and a support plate in a secondary battery according to still another embodiment of the present invention.

Referring to FIG. 12, the support plate 1160 includes a first conductive plate 1161, a second conductive plate 1162, and an insulation plate 1163 located between the first conductive plate 1161 and the second conductive plate 1162.

Here, the first conductive plate 1161 includes one first tab 1161 a welded to a first non-coating portion 111 c. Thus, a first cutoff portion 1161 d having a relative large area is located around the first tab 1161 a. As a result, the first non-coating portion 111 c of an electrode assembly 110 is exposed to the outside through the first cutoff portion 1161d. Because the exposed non-coating portion 111 c of the electrode assembly 110 and an electrode terminal 130 inserted into the first non-coating portion 111c are directly and easily welded to each other, the weld strength between the electrode assembly 110 and the first electrode terminal 130 may be improved,

Also, the second conductive plate 1162 includes one second tab 1162a welded to a second non-coating portion 112c. Thus, a second cutoff portion 1162d having a relative large area is located around the second tab 1162a. As a result, the second non-coating portion 112c of the electrode assembly 110 is exposed to the outside through the second cutoff portion 1162d. Because the exposed non-coating portion 112c of the electrode assembly 110 and an electrode terminal 140 inserted into the second non-coating portion 112c are directly and easily welded to each other, the weld strength between the electrode assembly 110 and the second electrode terminal 140 may be improved.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A rechargeable battery comprising:
at least one electrode assembly (110) having a first electrode (111), a second electrode (112) and a separator (113) interposed between the first and the second electrodes (111, 112), wherein the first electrode (111) comprises a first uncoated region (111c) and the second electrode (112) comprises a second uncoated region (112c),
a case (120) for mounting the at least one electrode assembly (110) therein; and
a cap plate (150) for covering an opening of the case (120),
a first electrode terminal (130) including a weld part (131) welded to the first non-coating portion (111 c) to contact the first electrode ([0046]), **characterized in that** a support plate (160) is provided between the electrode assembly (110) and the case (120), the support plate (160) including at least one conductive plate (161) electrically coupled to the first or second uncoated region (111c, 112c) of one of the at least one electrode assemblies (110), the at least one conductive plate (161) comprising at least one first portion (161 a), the first portion (161 a) extending in a vertical direction of the first or second uncoated region (111c, 112c) with a height being smaller than the height of the first or second uncoated region (111 c, 112c) the at least one conductive plate is coupled to.

2. Rechargeable battery according to claim 1, wherein the at least one conductive plate (161) further comprises a third portion (161 c) with a height, and wherein each first portion (161 a) has a first height, such that the sum of the first heights of the at least one first portion (161 a) is smaller than the height of the third portion (161c).

3. Rechargeable battery according to claim 1 or 2, wherein a flat portion of the one of the first or second uncoated region (111c, 112c) has a height being larger than the sum of the height of the at least one first portion (161 a).

4. Rechargeable battery according to any of the previous claims, wherein a plurality of first portions (161 a) are provided spaced apart from each other and defining at least one cutout portion (161d) located between pairs of first portions (161 a).

5. Rechargeable battery according to claim 4, wherein the sum of the heights of the at least one cutout portion (161 d) is larger than the sum of the heights of the plurality of first portions (161a).

6. Rechargeable battery according to any of the previous claims, wherein the at least one first portion (161 a) is welded to the one of the first or second uncoated region (111c, 112c).

7. Rechargeable battery according to any of the previous claims, wherein the support plate (160) comprises a first conductive plate (161) and a second conductive plate (162), wherein
the first conductive plate (161) is provided being electrically connected to the first uncoated region (111c) of the one of the at least one electrode assembly (110), and
a second conductive plate (162) is provided on the same side of the one of the at least one electrode assembly (110) as the first conductive plate (161) and being electrically connected to the second uncoated region (112c) of the electrode assembly (110).

8. Rechargeable battery according to claim 7, wherein two sets of first and second conductive plates (261, 262; 261', 262') are provided on opposing side surfaces of the one of the at least one electrode assembly (110).

9. Rechargeable battery according to claim 7, wherein a first and a second electrode assembly (710) are provided coupled to each other, wherein a first set (861, 862) of first and second conductive plates (861, 862) is provided on an outer surface of the first electrode assembly (710) and a second set (861', 862') of first and second conductive plates (861', 862') is provided on an outer surface of the second electrode assembly (710).

10. Rechargeable battery according to any of claims 1 to 6, wherein
a first conductive plate (460) is provided being electrically connected to the first or second uncoated region (111c, 112c) of the one of the at least one electrode assembly (110), and
a third conductive plate (460') is provided on an opposing side of the one of the at least one electrode assembly (110) with respect to the first conductive plate (460) and being electrically connected to the same uncoated region (111c, 112c) as the first conductive plate (460).

11. Rechargeable battery according to any of claims 1 to 6, wherein a first and a second electrode assembly (710) are provided coupled to each other and
a first conductive plate (1060) is provided on an outer surface of the first electrode assembly (710) and being electrically connected to the second uncoated region (112c) of the first electrode assembly (710), and
a third conductive plate (1060') is provided on an outer surface of the second electrode assembly (710) and being electrically connected the second uncoated region (112c) of the second electrode assembly (710).

12. Rechargeable battery of any of claims 7 to 11, wherein an insulating member (163) is interposed between a first conductive plate (161) and a second conductive plate (162).

13. Rechargeable battery (100) according to any of the previous claims, wherein the third portion (161c) is arranged in parallel to a main portion of the respective electrode assembly (110) and the first portion (161 a) is arranged in parallel to the first or second uncoated region (111c, 112c) of the respective electrode assembly (110).

14. Rechargeable battery according to claim 13, wherein the conductive plate (161) is provided with a second portion (161b) connecting the third portion (161c) with the first portion (161 a) and being angled with respect to the third portion (161c) and/or the first portion (161 a).

15. Rechargeable battery according to any of the previous claims, wherein the at least one conductive plate is made of metal.

## Patentansprüche

1. Wiederaufladbare Batterie, umfassend:
wenigstens eine Elektrodenbaugruppe (110) mit einer ersten Elektrode (111), einer zweiten Elektrode (112) und einem zwischen der ersten und der zweiten Elektrode (111, 112) angeordneten Separator (113), wobei die erste Elektrode (111) einen ersten unbeschichteten Bereich (111c) umfasst und die zweite Elektrode (112) einen zweiten unbeschichteten Bereich (112c) umfasst,
ein Gehäuse (120) zur Befestigung der wenigstens einen Elektrodenbaugruppe (110) darin;
und eine Deckelplatte (150) zum Abdecken einer Öffnung des Gehäuses (120),
einen ersten Elektrodenanschlusspunkt (130) mit einem an den ersten unbeschichteten Bereich (111c) angeschweißten Schweißteil (131) zur Kontaktierung der ersten Elektrode ([0046]), **dadurch gekennzeichnet, dass**
zwischen der Elektrodenbaugruppe (110) und dem Gehäuse (120) eine Trägerplatte (160) bereitgestellt ist, wobei die Trägerplatte (160) wenigstens eine leitfähige Platte (161) umfasst, die elektrisch mit dem ersten oder zweiten unbeschichteten Bereich (111c, 112c) einer der wenigstens einen Elektrodenbaugruppe (110) verbunden ist,
wobei die wenigstens eine leitfähige Platte (161) wenigstens einen ersten Abschnitt (161 a) umfasst, wobei sich der erste Abschnitt (161 a) in einer vertikalen Richtung des ersten oder zweiten unbeschichteten Bereichs (111c, 112c) mit einer Höhe, die kleiner ist als die Höhe des ersten oder zweiten unbeschichteten Bereichs (111c, 112c), mit dem die wenigstens eine leitfähige Platte verbunden ist, erstreckt.

2. Wiederaufladbare Batterie nach Anspruch 1, wobei die wenigstens eine leitfähige Platte (161) weiterhin einen dritten Abschnitt (161c) mit einer Höhe umfasst und wobei jeder erste Abschnitt (161a) eine erste Höhe aufweist, derart dass die Summe der ersten Höhen des wenigstens einen ersten Abschnitts (161a) kleiner ist als die Höhe des dritten Abschnitts (161c).

3. Wiederaufladbare Batterie nach Anspruch 1 oder 2, wobei ein flacher Abschnitt des einen des ersten oder zweiten unbeschichteten Bereichs (111c, 112c) eine Höhe aufweist, die größer ist als die Summe der Höhen des wenigstens einen ersten Abschnitts (161a).

4. Wiederaufladbare Batterie nach einem der vorangehenden Ansprüche, wobei eine Mehrzahl erster Abschnitte (161a) vorgesehen ist, die voneinander beabstandet sind und wenigstens einen zwischen Paaren erster Abschnitte (161a) befindlichen Aussparungsabschnitt (161d) definieren.

5. Wiederaufladbare Batterie nach Anspruch 4, wobei die Summe der Höhen des wenigstens einen Aussparungsabschnitts (161d) größer ist als die Summe der Höhen der Mehrzahl erster Abschnitte (161a).

6. Wiederaufladbare Batterie nach einem der vorangehenden Ansprüche, wobei der wenigstens eine erste Abschnitt (161a) an den einen des ersten oder zweiten unbeschichteten Bereichs (111c, 112c) angeschweißt ist.

7. Wiederaufladbare Batterie nach einem der vorangehenden Ansprüche, wobei die Trägerplatte (160) eine erste leitfähige Platte (161) und eine zweite leitfähige Platte (162) umfasst, wobei
die erste leitfähige Platte (161) elektrisch mit dem ersten unbeschichteten Bereich (111c) der einen der wenigstens einen Elektrodenbaugruppe (110) verbunden bereitgestellt ist, und
eine zweite leitfähige Platte (162) auf der gleichen Seite der einen der wenigstens einen Elektrodenbaugruppe (110) wie die erste leitfähige Platte (161) und elektrisch mit dem zweiten unbeschichteten Bereich (112c) der Elektrodenbaugruppe (110) verbunden bereitgestellt ist.

8. Wiederaufladbare Batterie nach Anspruch 7, wobei zwei Sätze erster und zweiter leitfähiger Platten (261, 262; 261', 262') auf gegenüberliegenden Seitenflächen der einen der wenigstens einen Elektrodenbaugruppe (110) bereitgestellt sind.

9. Wiederaufladbare Batterie nach Anspruch 7, wobei eine erste und eine zweite Elektrodenbaugruppe (710) miteinander verbunden bereitgestellt sind, wobei ein erster Satz (861, 862) erster und zweiter leitfähiger Platten (861, 862) auf einer Außenfläche der ersten Elektrodenbaugruppe (710) bereitgestellt ist und ein zweiter Satz (861', 862') erster und zweiter leitfähiger Platten (861', 862') auf einer Außenfläche der zweiten Elektrodenbaugruppe (710) bereitgestellt ist.

10. Wiederaufladbare Batterie nach einem der Ansprüche 1 bis 6, wobei eine erste leitfähige Platte (460) elektrisch mit dem ersten oder zweiten unbeschichteten Bereich (111c, 112c) der einen der wenigstens einen Elektrodenbaugruppe (110) verbunden bereitgestellt ist, und
eine dritte leitfähige Platte (460') auf einer gegenüberliegenden Seite der einen der wenigstens einen Elektrodenbaugruppe (110) bezogen auf die erste leitfähige Platte (460) und elektrisch mit dem gleichen unbeschichteten Bereich (111c, 112c) wie die erste leitfähige Platte (460) verbunden bereitgestellt ist.

11. Wiederaufladbare Batterie nach einem der Ansprüche 1 bis 6, wobei eine erste und eine zweite Elektrodenbaugruppe (710) miteinander verbunden bereitgestellt sind und eine erste leitfähige Platte (1060) auf einer Außenfläche der ersten Elektrodenbaugruppe (710) und elektrisch mit dem zweiten unbeschichteten Bereich (112c) der ersten Elektrodenbaugruppe (710) verbunden bereitgestellt ist und
eine dritte leitfähige Platte (1060') auf einer Außenfläche der zweiten Elektrodenbaugruppe (710) und elektrisch mit dem zweiten unbeschichteten Bereich (112c) der zweiten Elektrodenbaugruppe (710) verbunden bereitgestellt ist.

12. Wiederaufladbare Batterie nach einem der Ansprüche 7 bis 11, wobei zwischen einer ersten leitfähigen Platte (161) und einer zweiten leitfähigen Platte (162) ein Isolierelement (163) angeordnet ist.

13. Wiederaufladbare Batterie (100) nach einem der vorangehenden Ansprüche, wobei der dritte Abschnitt (161c) parallel zu einem Hauptabschnitt der jeweiligen Elektrodenbaugruppe (110) angeordnet ist und der erste Abschnitt (161 a) parallel zu dem ersten oder zweiten unbeschichteten Bereich (111c, 112c) der jeweiligen Elektrodenbaugruppe (110) angeordnet ist.

14. Wiederaufladbare Batterie nach Anspruch 13, wobei die leitfähige Platte (161) mit einem zweiten Abschnitt (161b) versehen ist, der den dritten Abschnitt (161c) mit dem ersten Abschnitt (161 a) verbindet und der bezogen auf den dritten Abschnitt (161c) und/oder den ersten Abschnitt (161a) abgewinkelt ist.

15. Wiederaufladbare Batterie nach einem der vorangehenden Ansprüche, wobei die wenigstens eine leitfähige Platte aus Metall gefertigt ist.

## Revendications

1. Batterie rechargeable, comprenant :
au moins un ensemble d'électrodes (110), comportant une première électrode (111), une deuxième électrode (112) et un séparateur (113), interposé entre la première et la deuxième électrodes (111, 112), dans lequel la première électrode (111) comprend une première région non revêtue (111c) et la deuxième électrode (112) comprend une deuxième région non revêtue (112c),
un boîtier (120) pour monter l'au moins un ensemble d'électrodes (110) à l'intérieur de celui-ci ; et
une plaque de capuchon (150) pour recouvrir une ouverture du boîtier (120),
une première borne d'électrode (130) comprenant une partie de soudure (131) soudée à la première partie non revêtue (111c) de façon à venir en contact avec la première électrode ([0046]), **caractérisée en ce que** :
une plaque de support (160) est disposée entre l'ensemble d'électrodes (110) et le boîtier (120), la plaque de support (160) comprenant au moins une plaque conductrice (161) électriquement couplée à la première ou à la deuxième région non revêtue (111c, 112c) de l'un des, au moins un, ensembles d'électrodes (110), l'au moins une plaque conductrice (161) comprenant au moins une première partie (161a), la première partie (161a) s'étendant dans une direction verticale de la première ou de la deuxième région non revêtue (111c, 112c), avec une hauteur qui est inférieure à la hauteur de la première ou de la deuxième région non revêtue (111c, 112c) à laquelle l'au moins une plaque conductrice est couplée.

2. Batterie rechargeable selon la revendication 1, dans laquelle l'au moins une plaque conductrice (161) comprend de plus une troisième partie (161c) avec une hauteur, et dans laquelle chaque première partie (161a) a une première hauteur, de telle sorte que la somme des premières hauteurs de l'au moins une première partie (161a) est inférieure à la hauteur de la troisième partie (161c).

3. Batterie rechargeable selon la revendication 1 ou 2, dans laquelle une partie plate de l'une de la première ou de la deuxième région non revêtue (111c, 112c) a une hauteur qui est supérieure à la somme de la hauteur de l'au moins une première partie (161a).

4. Batterie rechargeable selon l'une quelconque des revendications précédentes, dans laquelle une pluralité de premières parties (161a) sont disposées de façon mutuellement espacée les unes des autres, et définissent au moins une partie d'entaille (161d) située entre des paires de premières parties (161a).

5. Batterie rechargeable selon la revendication 4, dans laquelle la somme des hauteurs de l'au moins une partie d'entaille (161d) est supérieure à la somme des hauteurs de la pluralité de premières parties (161a).

6. Batterie rechargeable selon l'une quelconque des revendications précédentes, dans laquelle l'au moins une première partie (161a) est soudée à l'une de la première ou de la deuxième région non revêtue (111c, 112c).

7. Batterie rechargeable selon l'une quelconque des revendications précédentes, dans laquelle la plaque de support (160) comprend une première plaque conductrice (161) et une deuxième plaque conductrice (162), dans laquelle :
la première plaque conductrice (161) est disposée de façon à être électriquement connectée à la première région non revêtue (111c) de l'un des au moins un ensembles d'électrodes (110), et
une deuxième plaque conductrice (162) est disposée du même côté de l'un des au moins un ensembles d'électrodes (110) que la première plaque conductrice (161), et est électriquement connectée à la deuxième région non revêtue (112c) de l'ensemble d'électrodes (110).

8. Batterie rechargeable selon la revendication 7, dans laquelle deux jeux de premières et deuxièmes plaques conductrices (261, 262 ; 261', 262') sont disposés sur des surfaces latérales opposées de l'un des au moins un ensembles d'électrodes (110).

9. Batterie rechargeable selon la revendication 7, dans laquelle un premier et un deuxième ensembles d'électrodes (710) sont disposés de façon à être couplés l'un à l'autre, un premier jeu (861, 862) de première et deuxième plaques conductrices (861, 862) étant disposé sur une surface extérieure du premier ensemble d'électrodes (710), et un deuxième jeu (861', 862') de première et deuxième plaques conductrices (861', 862') étant disposé sur une surface extérieure du deuxième ensemble d'électrodes (710).

10. Batterie rechargeable selon l'une quelconque des revendications 1 à 6, dans laquelle :
une première plaque conductrice (460) est disposée, étant électriquement connectée à la première ou à la deuxième région non revêtue (111c, 112c) de l'un des au moins un ensembles d'électrodes (110), et
une troisième plaque conductrice (460') est disposée sur un côté opposé de celui des au moins un ensembles d'électrodes (110) vis-à-vis de la première plaque conductrice (460), et étant électriquement connectée à la même région non revêtue (111c, 112c) que la première plaque conductrice (460).

11. Batterie rechargeable selon l'une quelconque des revendications 1 à 6, dans laquelle un premier et un deuxième ensembles d'électrodes (710) sont disposés de façon à être couplés l'un à l'autre, et
une première plaque conductrice (1060) est disposée sur une surface extérieure du premier ensemble d'électrodes (710), étant électriquement connectée à la deuxième région non revêtue (112c) du premier ensemble d'électrodes (710), et
une troisième plaque conductrice (1060') est disposée sur une surface extérieure du deuxième ensemble d'électrodes (710), étant électriquement connectée à la deuxième région non revêtue (112c) du deuxième ensemble d'électrodes (710).

12. Batterie rechargeable selon l'une quelconque des revendications 7 à 11, dans laquelle un élément isolant (163) est interposé entre une première plaque conductrice (161) et une deuxième plaque conductrice (162).

13. Batterie rechargeable (100) selon l'une quelconque des revendications précédentes, dans laquelle la troisième partie (161c) est disposée en parallèle avec une partie principale de l'ensemble d'électrodes respectif (110), et la première partie (161a) est disposée en parallèle avec la première ou la deuxième région non revêtue (111c, 112c) de l'ensemble d'électrodes respectif (110).

14. Batterie rechargeable selon la revendication 13, dans laquelle la plaque conductrice (161) est munie d'une deuxième partie (161b) connectant la troisième partie (161c) à la première partie (161a), et qui est en angle par rapport à la troisième partie (161c) et/ou à la première partie (161a).

15. Batterie rechargeable selon l'une quelconque des revendications précédentes, dans laquelle l'au moins une plaque conductrice est réalisée en métal.
